# EUROPEAN PATENT APPLICATION

(11) **EP 2 127 549 A1**
(43) Date of publication of application: **02.12.2009**
(21) Application number: 07850358.8
(22) Date of filing: 10.12.2007
(51) Int. Cl.: A41H 43/00, A41H 3/00, G06F 17/50

(54) **WEARING SIMULATION DEVICE, SIMULATION METHOD, AND SIMULATION PROGRAM**

(30) Priority: 28.12.2006 JP 2006355737
(71) Applicant: Shima Seiki Manufacturing., Ltd., Wakayama-shi, Wakayama 641-0003 (JP)
(72) Inventor: KUSUDO, Masaaki, Wakayama-shi, Wakayama 641-0003 (JP); NAKAMURA, Atsushi, Wakayama-shi, Wakayama 641-0003 (JP); NAKAMURA, Toshinori, Wakayama-shi, Wakayama 641-0003 (JP)
(74) Representative: Emde, Eric
(86) International application number: PCT/JP2007/073790
(87) International publication number: WO 2008/081687

(57) **Abstract**

Parts are associated with the parts of a human body, such as a right arm, a left arm, torsos, a right leg and a left leg. Frames (40, 50) are generated around the axes of the human body parts, and the parts are wrapped around the frames (40, 50). The positions of the parts are adjusted by sliding or rotating the parts. The parts can be easily placed with respect to the human body model.

## Description

The present invention relates to a simulation of a situation where a human body is dressed in a garment.

Dressing a human body model in a designed garment on the computer is proposed (Patent Reference 1: Japanese Patent Application Publication No. H8-246219). Here, the design of a garment obtained by stitching a plurality of cloth parts together is considered. In order to dress the human body model in this garment, the parts need to be placed in appropriate positions around the model. Since there is much point in performing a simulation in a three-dimensional space, it is difficult to move the parts three-dimensionally on the monitor and place them in the appropriate positions. In order to alleviate this problem, a method considered is to apply an attribute to each part, the attribute being, for example, a right sleeve, and to specify a general description of the position in which the part needs to exist. However, when the garment has a complicated shape, it is difficult to apply attributes. Further, when adding the parts, it is not easy to specify the position of each part using a prepared attribute only. It is difficult to predict the type of a part required for designing the garment and apply an attribute to each part.
Patent Reference 1: Japanese Patent Application Publication No. H8-246219

An object of the present invention is to be able to easily place parts of a garment onto a human body model.

A dressing simulation device according to the present invention is a device for virtually dressing, in a three-dimensional space, a human body model in a garment having a plurality of parts, the device being characterized in having:
frame generation means for generating, around an axis of each human body section of the human body model, a frame in a solid figure surrounding each section of the human body;
parts placing means for placing the parts of the garment by moving the parts of the garment relative to the frame and wrapping the parts of the garment around the frame; and
simulation means for virtually joining the plurality of parts wrapped around the frame, and simulating a dressing state within the three-dimensional space.

A dressing simulation method according to the present invention is a method for virtually dressing, in a three-dimensional space, a human body model in a garment having a plurality of parts, the method being characterized in including:
generating, around an axis of each human body section of the human body model, a frame in a solid figure surrounding each section of the human body;
placing the parts of the garment by moving the parts of the garment relative to the frame and wrapping the parts of the garment around the frame; and
virtually joining the plurality of parts wrapped around the frame, and simulating a dressing state of the human body within the three-dimensional space.

A dressing simulation program according to the present invention is a program executed by a computer and for virtually dressing, in a three-dimensional space, a human body model in a garment having a plurality of parts, the program being characterized in having:
a frame generation instruction for generating, around an axis of each human body section of the human body model, a frame in a solid figure surrounding each section of the human body;
a parts placing instruction for placing the parts of the garment, by moving the parts of the garment relative to the frame and wrapping the parts of the garment around the frame; and
a simulation instruction for virtually joining the plurality of parts wrapped around the frame, and simulating a dressing state of the human body within the three-dimensional space.

It is preferred that, when placing the parts, the parts of the garment be slid freely along the frame in a direction parallel to the axis of each section of the human body, and that the parts of the garment be rotated freely around the axis along the frame.
It is more preferred that the frame be a cylinder or a cone having the axis as the center thereof.

In the present invention, the parts of the garment are placed onto the frame, instead of being moved relative to the human body model in the three-dimensional space. Once each of the parts is associated with each section of the human body, the parts are placed in the vicinity of the parts around the axes of the corresponding sections. Next, when the parts are moved relative to the frame and wrapped around the frame, the parts are placed onto the sections of the human body. Therefore, the parts can be placed easily with respect to the human body, and it is not necessary to prepare an attribute for each place in which each part is placed.

Because the most parts are so structured to surround the sections of the human body respectively, the parts can be placed in a desired form by sliding the parts along the axes respectively and rotating the parts around the axes respectively.
The parts can be placed easily around the respective sections of the human body by forming the frame into a cylinder or a cone having each axis as the center thereof and wrapping the frame with the parts.
The garment is configured into a knitted product in which a plurality of parts composed of cloth or knitted fabric are stitched together or in which a plurality of parts are knitted simultaneously in a seamless condition and joined together. Examples of the parts include right and left sleeves, a collar, a neck section, torsos, a belt, a skirt, and right and left legs of a pair of pants.

Fig. 1 is a block diagram of a dressing simulation device of an embodiment;
Fig. 2 is a flowchart of a dressing simulation method of the embodiment;
Fig. 3 is a block diagram of a dressing simulation program of the embodiment;
Fig. 4 is a perspective view showing an example of a frame according to the embodiment;
Fig. 5 is a perspoctive view showing another example of the frame;
Fig. 6 is a diagram according to the embodiment, showing a state in which the frame is generated around a left sleeve and parts are stuck to a cylinder;
Fig 7 is a diagram showing a state in which the distance between the frame and an axis (left) and the number of peak points (right) are changed from Fig. 6;
Fig. 8 is a diagram showing a state Which is obtained from Fig. 6 and in which the parts are rolled around the frame;
Fig. 9 is a perspective view showing a state in which a part to be added is stuck to the frame in order to add one more layer to a two-layered skirt;
Fig. 10 is a front view of Fig. 9; and
Fig. 11 is a front view showing a state in which the parts shown in

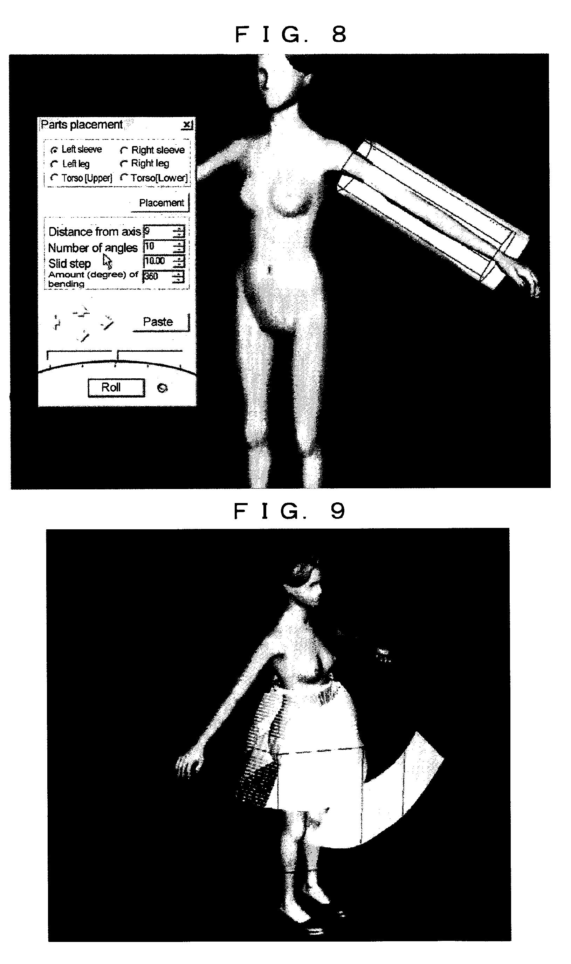

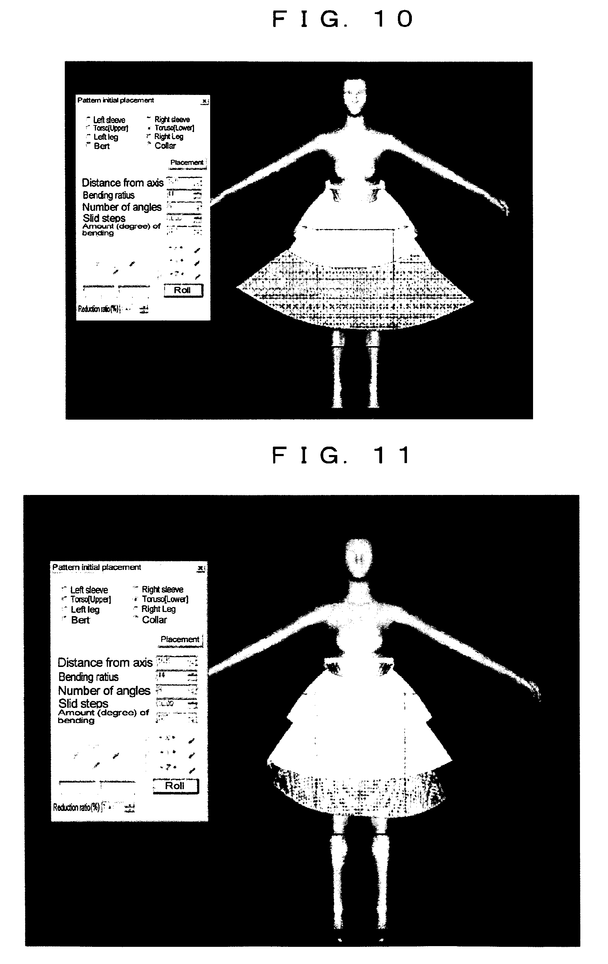

Figs. 9 and 10 are rolled around the frame.

- 2: Dressing simulation device
- 4: User interface
- 5: Keyboard
- 6: Stylus
- 7: Mouse
- 8: Menu
- 10: Monitor
- 11: Pattern image
- 12: Simulation image
- 16: Human body shape storage unit
- 18: Frame generation deformation part
- 20: Parts placement part
- 24: Stitching part
- 26: Three-dimensional simulation part
- 30: Dressing simulation program
- 31: User interface management instruction
- 32: Human body shape storage instruction
- 33: Frame generation deformation instruction
- 34: parts placement instruction
- 35: Stitch instruction
- 36: Three-dimensional simulation instruction
- 40, 50: Frame

The best mode for carrying out the present inventions is described hereinafter, but the present invention is not limited to this mode.

### Embodiment

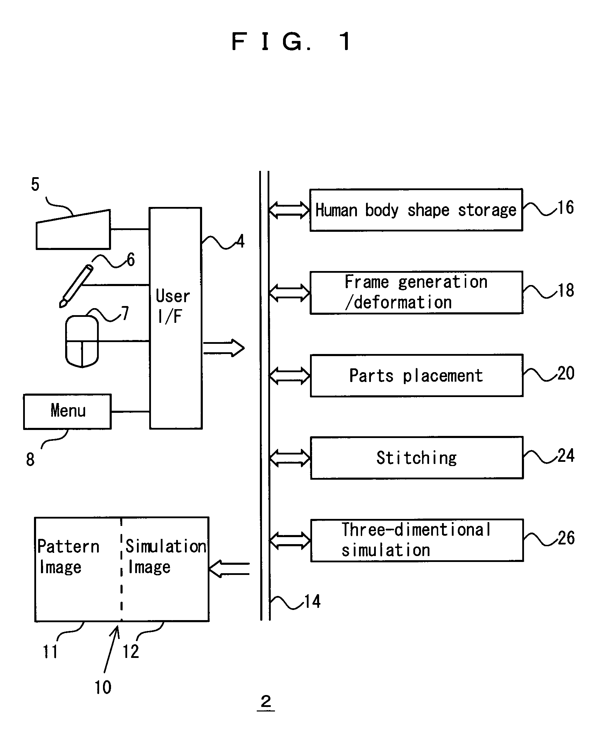

Figs. 1 to 11 each show a dressing simulation device 2, dressing simulation method, and dressing simulation program according to an embodiment. The descriptions of the dressing simulation device 2 can be applied to the simulation method and the simulation program. Conversely, the descriptions of the simulation method can be applied to the simulation device and the simulation program.

In each of the diagrams, reference numeral 4 represents a user interface, which receives inputs from a keyboard 5, a stylus 6, a mouse 7 or a trackball that is not shown, and interprets the inputs based on a menu 8. Reference numeral 10 represents a monitor, which displays, simultaneously, a pattern image 11 showing each part of a garment, and a simulation image 12 in which a human body model is virtually dressed in the garment. The monitor 10 also displays a screen showing a virtual placement of the parts onto the human body model in a simulation process. A user specifies a content of processing by means of the menu 8 and specifies the positions of the parts on the images 11, 12 using the stylus 6 or the mouse 7, to change the placement of the parts or the design.

A human body shape storage unit 16 stores the three-dimensional shape of the human body model, and a frame generation deformation part 18 generates a frame to be provided around the axis of each section of the human body and deforms the shape of the frame. A parts placement part 20 places the parts of the garment by attaching them to the frame, slides or rotates the parts on the frame to adjust the positions of the parts, and places the parts wrapping the frame therewith. A stitching part 24 virtually stitches the placed parts, that is, connects the parts together. A three-dimensional simulation part 26 simulates, on the garment having the parts connected together, the gravitational force acting on the garment, the friction between the garment and the human body, and force acting on each part as a result of stitching. This simulation is carried out in a three-dimensional space.

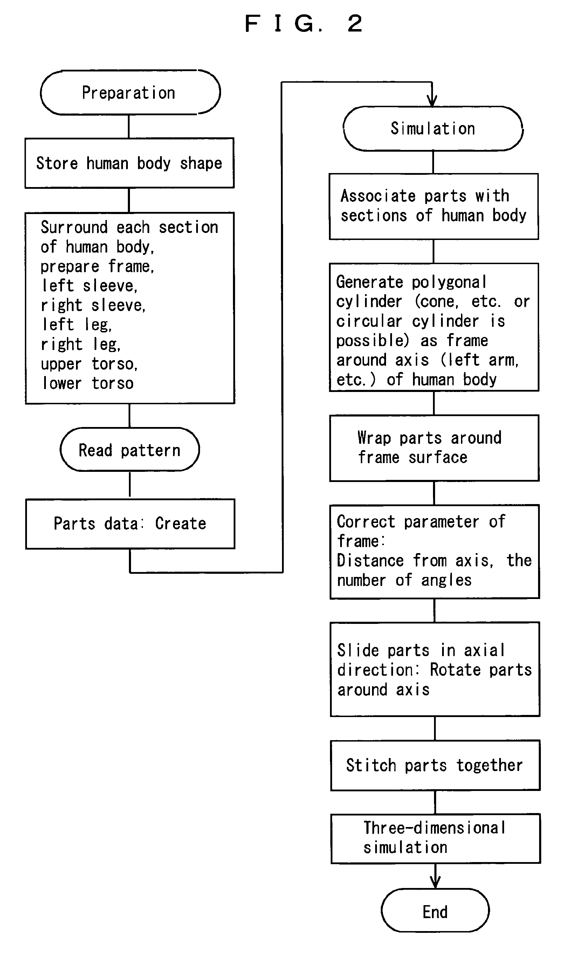

Fig. 2 shows each step of the simulation, wherein three-dimensional data of the shape of the human body is stored in the human body shape storage unit. Next, the frame for surrounding each section of the human body is prepared. The frame is formed into a polygonal cylinder, circular cylinder, or a part of a cone, i.e., a truncated cone, and the human body is provided with five axes for the left arm, the right arm, the torso, the left leg and the right leg. The torso is divided into an upper half part and a lower, half part to obtain an upper torso and a lower torso. As a result, a total of six axes are created. The frame is provided to surround the axes, and the size of the frame is determined by specifying the distance between each axis and the frame. The shape of the frame is also changed, ranging from a four-sided pyramid frame to a circular cylindrical, frame, by specifying the number of angles, i.e., the number of the peak points of the frame.

The user reads the data of the existing parts or creates and reads parts data by correcting the data of the existing parts. Next, the user performs a simulation on the parts data. In a simulation preparation step, the parts are placed on the human body model. First, each of the parts is associated with any of the sections of the human body, such as the left sleeve, right sleeve, left leg, right leg, upper torso, and lower torso. Besides these sections, a neck or the like may be added as an additional section of the human body. The axes are provided in relation to the respective sections of the human body, and the frame for wrapping each axis is generated. The parts are associated with the respective sections of the human body and attached to the surface of the corresponding frame.

The frame parameter can be corrected freely, and, for example, the distance between the frame and each axis and the number of angles can be corrected. As a result, the frame is deformed. Each part can be slid freely in parallel to each axial direction of the frame and rotated around the axis. In addition, the parts carry out an arbitral motion on the surface of the frame within a range specified by the user. When each part is positioned in a desired position of the frame of a desired shape, the placement of the part is completed. When the placement of the parts on the human body model is completed in this manner, the parts are fixed with each other and thereby virtually stitched together. Next, a stable state in which the human body model is dressed in the garment configured by the connected parts is simulated in a three-dimensional space by using an appropriate dynamic model. This simulation consists of associating each part with each section of the human body, generating/deforming the frame surrounding the axis of each section of the human body, fixing the parts to the frame, connecting the parts together to obtain a garment in which the human body model is dressed, and simulating the stable dressing state of the garment in a three-dimensional space.

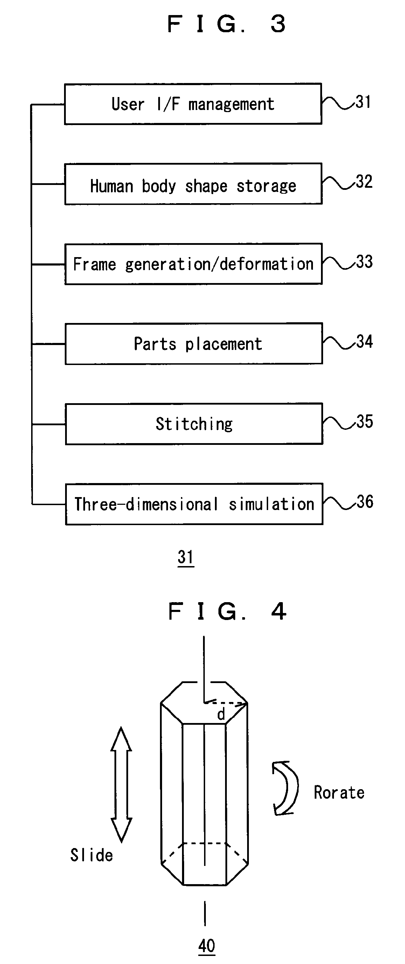

Fig. 3 shows a dressing simulation program 30. A user interface management instruction 31 realizes the user interface 4 on the computer, and a human body shape storage instruction 32 realizes the human body shape storage unit 16 on the computer. A frame generation deformation instruction 33 realizes the frame generation deformation part 18 on the computer, and a parts placement instruction 34 realizes a parts placement part 20. A stitch instruction 35 realizes the stitching part 24, and a three-dimensional simulation instruction 36 realizes the three-dimensional simulation part 26. The simulation program 30 is supplied from a CDROM or other storage medium and a carrier wave to the simulation device 2.

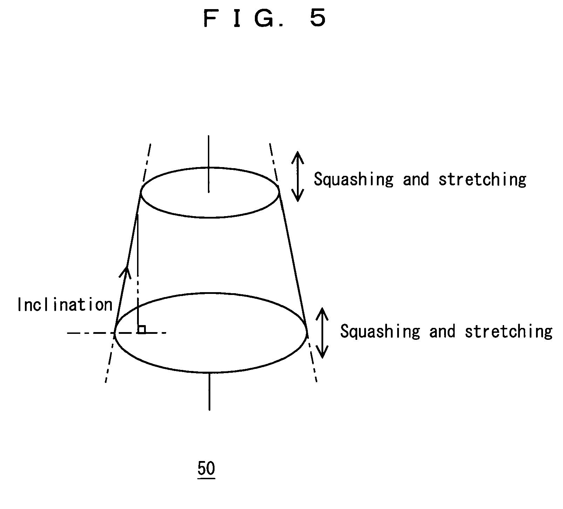

Figs. 4 and 5 show frames 40 and 50. The frame 40 has a polygonal cylindrical shape, and the distance between the frame 40 and the relevant axis is represented using an alphabet "d." The corresponding parts can be slid in parallel to the axis or rotate around the axis. Note that temporarily joining the parts to the surface of the frame is called "attachment," and in this step the frame 40 is not yet wrapped with the parts, but the frame 40 is wrapped with the parts after this step. Because the frame 50 shown in Fig. 5 is configured by a part of a cone, i.e., a truncated cone, the frame 50 is suitable for placing the parts corresponding to an expanded hem of a skirt or the like. The inclination of the skirt can be adjusted with the frame 50, and the shape of this frame can be changed by squashing and stretching an upper end and a lower end thereof.

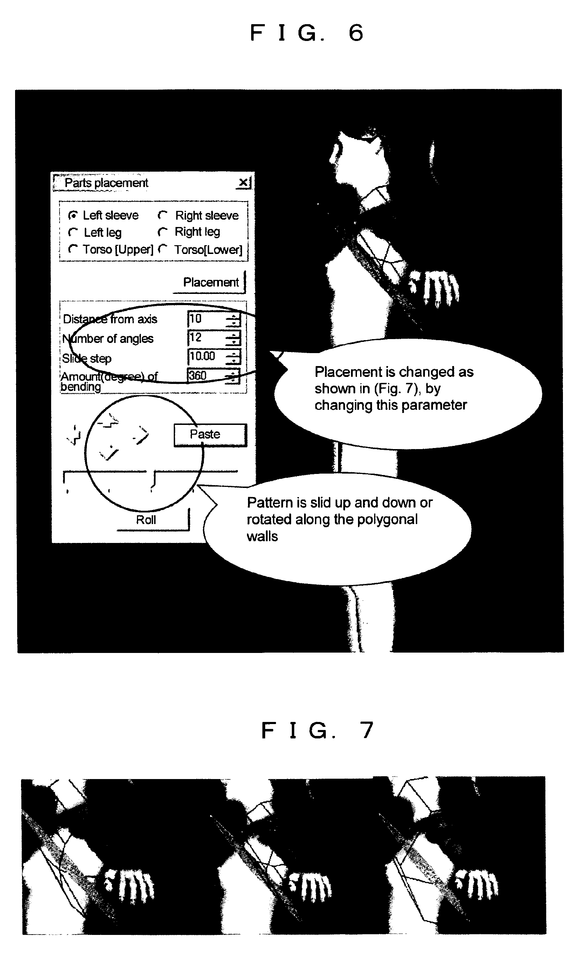

Figs. 6 to 8 each show an example of placing the left sleeve onto the human body model. Similar placement is carried out with other parts as well. On the monitor 10, the human body model is displayed as the simulation image and the parts are placed to obtain the left sleeve, whereby a polygonal frame is generated around the axis of the left arm. Thereafter, the parts are attached to this polygonal cylinder. The direction of attachment is specified using, for example, the stylus 6 or the like. From this step, the shape of the frame can be changed accordingly. For example, when the distance between the frame and the axis is increased, the frame expands as shown on the left-hand side of Fig. 7, and when the number of angles is reduced, the frame is deformed as shown on the right-hand side of Fig. 7. A slide step is a parameter indicating the degree of easiness of deformation of the parts when performing the three-dimensional simulation, and the amount of bending the parts represents the angle obtained when wrapping the parts around the frame and may or may not be specified.

The parts attached to the frame are slid using an arrow button shown on the menu displayed on the screen of the simulation image 12. For example, the sleeve can be shifted to one side by using an upward arrow button and to the wrist side by using a downward arrow button. The parts can be moved right and left by using a right-and-left arrow button. The parts are wrapped around the frame by rolling the parts, to compete the placement of the parts. The placement of the parts may be changed by bragging the parts placed on the frame, by using the stylus or the mouse.

In this manner, a desired placement can be realized by moving the parts on the frame. Particularly, the parts are moved on the surface of the frame, and this movement can be executed easily by sliding or rotating the parts.

Once all of the parts are placed, the parts are stitched together. A stitch relationship between the parts may be specified beforehand based on, for example, the parts, or a section where the parts are stitched together may be specified using the stylus or the mouse. Once the stitching is finished, a dynamic simulation is performed to evaluate the dressing state of the garment. When placing the parts onto the frame, the parts may be placed so that the stitching can be performed, and therefore the parts need not be placed rigorously.

Figs. 9 to 11 each show a simulation of a skirt having a somewhat complicated design. In this example, a skirt consisting of upper and lower two layers is finished with placement, and a designer adds parts corresponding to the third layer of the skirt. The third layer of the skirt corresponds to the lower torso because it wraps both legs from the lower section of the torso, and the axis of the third layer is vertical. The polygonal frame is generated around this axis, and the parts for this third layer are placed along the frame. Here, the parts for the third layer are placed inside the parts corresponding to the second layer. Placement on the inside of the parts corresponding to the second layer can be specified by reducing the distance between the frame and the axis. In this manner described above, the placement is completed as shown in Fig. 11. The display shown in Figs. 9 and 10 may be obtained simultaneously, or the display shown in Fig. 9 may be obtained instead of the display shown in Fig. 10.

In the case of the skirt shown in Figs. 9 to 11, it is difficult to prepare the attributes, such as the first layer of the skirt, and the second layer of the skirt. However, the third layer of the skirt can be placed easily by generating the frame and correcting the distance between the frame and the axis or correcting the upper and lower positions. Note that the buttons, X, Y and Z shown in Fig. 10 and the like, represent the directions for moving the parts in parallel, but these buttons need not be provided.

When the garment is made of a cloth material, a simulation is performed such that the parts are stitched together and a distortion generated from the stitching is eliminated so that the garment is relaxed to its equilibrium position. Drape and the like are generated in this process. When the garment is made of a knit fabric, a simulation is performed such that the parts are stitched together, that the squashing and stretching of the parts caused by stitching the parts are reduced similarly, and that the garment is relaxed to its equilibrium position in view of the gravitational force acting on each part and the frictional force between the garment and the human body. In the case of a garment made of seamless knit fabrics, a simulation is performed such that the parts of actual knit fabrics are joined together seamlessly, and that the knit fabrics are joined together to similarly relax the garment into its equilibrium position.

In the embodiment described above, initial placement of the parts can be performed easily, and a step of manually placing the parts in appropriate positions can be carried out at high speed when performing a simulation.

## Claims

1. A dressing simulation device (2) for virtually dressing, in a three-dimensional space, a human body model in a garment having a plurality of parts, the device (2) being
**characterized in** comprising:
frame generation means for generating, around an axis of each human body section of the human body model, a frame (40, 50) in a solid figure surrounding each human body section;
parts placing means for placing the parts of the garment by moving the parts of the garment relative to the frame (40, 50) and wrapping the parts of the garment around the frame (40, 50); and
simulation means for virtually joining the plurality of parts wrapped around the frame (40, 50), and simulating a dressing state within the three-dimensional space.

2. The dressing simulation device according to claim 1, **characterized in that** the parts placing means slides the parts of the garment freely along the frame (40, 50) in a direction parallel to the axis of each human body section, and rotates the parts of the garment freely around the axis along the frame (40, 50).

3. The dressing simulation device according to claim 1, **characterized in that** the frame (40, 50) is a cylinder or a cone having the axis as the center thereof.

4. A dressing simulation method for virtually dressing, in a three-dimensional space, a human body model in a garment having a plurality of parts, the method being **characterized in** comprising:
generating, around an axis of each human body section of the human body model, a frame (40, 50) in a solid figure surrounding each human body section;
placing the parts of the garment by moving the parts of the garment relative to the frame (40, 50) and wrapping the parts of the garment around the frame (40, 50); and
virtually joining the plurality of parts wrapped around the frame (40, 50), and simulating a dressing state within the three-dimensional space.

5. A dressing simulation program (30) executed by a computer and for virtually dressing, in a three-dimensional space, a human body model in a garment having a plurality of parts, the program (30) being **characterized in** comprising:
a frame generation instruction for generating, around an axis of each human body section of me human body model, a frame (40, 50) in a solid figure surrounding each section of the human body;
a parts placing instruction for placing the parts of the garment by moving the parts of the garment relative to the frame (40, 50) and wrapping the parts of the garment around the frame (40, 50); and
a simulation instruction for virtually joining the plurality of parts wrapped around the frame (40, 50), and simulating a dressing state within the three-dimensional space.
